Europäisches Patentamt

European Patent Office

Office européen des brevets

(11) Veröffentlichungsnummer: **0 262 090 B1**

(12) **EUROPÄISCHE PATENTSCHRIFT**

(45) Veröffentlichungstag der Patentschrift: **02.09.92**

(21) Anmeldenummer: **87810522.0**

(22) Anmeldetag: **14.09.87**

(51) Int. Cl.⁵: **A47B 57/44**, A47B 47/03, F16B 12/30

(54) **Befestigungselement zur Befestigung von Einsätzen an Seitenwänden einer Möbelstruktur.**

(30) Priorität: **25.09.86 CH 3838/86**

(43) Veröffentlichungstag der Anmeldung:
**30.03.88 Patentblatt 88/13**

(45) Bekanntmachung des Hinweises auf die Patenterteilung:
**02.09.92 Patentblatt 92/36**

(84) Benannte Vertragsstaaten:
**AT BE CH DE ES FR GB GR IT LI NL SE**

(56) Entgegenhaltungen:
**BE-A- 483 709**
**GB-A- 370 567**
**US-A- 1 493 431**
**US-A- 2 806 755**

(73) Patentinhaber: **U. Schärer Söhne AG (USM)**
**Thunstrasse 55**
**CH-3110 Münsingen(CH)**

(72) Erfinder: **Scherrer, Kurt**
**Lerchenweg 18c**
**CH-3110 Münsingen(CH)**

(74) Vertreter: **Tschudi, Lorenz et al**
**Bovard AG Patentanwälte VSP Optingen-**
**strasse 16**
**CH-3000 Bern 25(CH)**

## Beschreibung

Die vorliegende Erfindung bezieht sich auf ein Befestigungselement zur Befestigung von Einsätzen an einer Seitenwand für eine Möbelstruktur gemäss dem Oberbegriff des Patentanspruches 1 sowie auf eine Seitenwand für eine Möbelstruktur zur Befestigung eines Befestigungselementes

Bei bisher in Möbelstrukturen verwendeten Seitenwänden wurden zur Befestigung von Einsätzen, wie z.B. Kipptüren, Einschiebtüren, Zwischentablaren oder Teleskopauszügen, entweder Schienen eingeschweisst, oder aber die umgebogenen Seitenränder der Seitenwände waren mit einer Rasterung versehen, welche wenig Möglichkeiten der nachträglichen Befestigung von Einsätzen, wie oben angeführt, bot. Im weitern besassen die bekannten Seitenwände nicht genügend gute statische Eigenschaften. Bisher verwendete Seitenwände wiesen auch je nach Einsatz angebrachte Befestigungslöcher auf, was den Nachteil aufwies, dass die Seitenwände beim Austausch eines Einsatzes ausgebaut werden mussten. Im weiteren waren bei bisher bekannten Seitenwänden für Möbelstrukturen die Befestigungslöcher derart angebracht, dass der ästhetische Eindruck unbefriedigend war.

Weiterhin sind Seitenwände für Möbelstrukturen bekannt, die in den Seitenrändern eine Rasterung in Form von Kerben aufweisen, welche Rasterung zum Einhängen von Schienen zwecks Montage eines Einsatzes, wie oben erwähnt, dient. Diese Seitenwände weisen den Nachteil auf, dass die Metallschienen materialaufwendig sind und diese Anordnung mit einer Rasterung nur beschränkte Möglichkeiten zur Montage bietet. Im weiteren ist diese vorbekannte Seitenwand, vom statischen Standpunkt aus betrachtet, nicht optimal.

Aus der BE-A-483 709 ist ein Befestigungselement zur Befestigung von Einsätzen an Seitenwänden einer Möbelstruktur mit einem Grundkörper mit einer Stirnfläche bekannt, wobei in der Stirnfläche mindestens ein Befestigungsorgan angebracht ist und mindestens eine im Grundkörper vorgesehene Bohrung. Zur Montage dieses Befestigungselementes ist zusätzlich in den Seitenwänden der Möbelstruktur eine vertikale Metallschiene mit quadratischen Löchern zum Einsatz des Befestigungselementes notwendig. Das Befestigungselement kann nicht direkt am Seitenrand einer Seitenwand befestigt werden. Im weiteren kann das Befestigungselement nur in vertikaler Richtung verstellt werden.

Es ist deshalb eine Aufgabe der vorliegenden Erfindung, ein Befestigungselement zur Befestigung von Einsätzen an einer Seitenwand für eine Möbelstruktur sowie eine Seitenwand für eine Möbelstruktur zu schaffen, welche die Nachteile der obgenannten vorbekannten Vorrichtung nicht aufweisen.

Dies wird erfindungsgemäss durch die Merkmale der Patentansprüche 1 und 6 erzielt. Bevorzugte Ausführungsformen ergeben sich aus den abhängigen Ansprüchen.

Das Befestigungselement und die Seitenwand können universeller als die vorbekannte Vorrichtung eingesetzt werden.

Im folgenden werden anhand der beiliegenden Zeichnung Ausführungsbeispiele der Erfindung sowie deren Verwendung näher beschrieben. Es zeigen:

Fig. 1 eine schematische Darstellung einer Möbelstruktur,

Fig. 2 eine perspektivische Ansicht einer Möbelstruktur gemäss Fig. 1,

Fig. 3 eine Draufsicht auf die Seitenwand gemäss Fig. 2,

Fig. 4 eine Seitenansicht der Seitenwand gemäss Fig. 3,

Fig. 5 eine perspektivische Darstellung eines in die Seitenwand gemäss Fig. 2-4 einsetzbaren Befestigungselementes,

Fig. 6 einen Schnitt durch das Befestigungselement gemäss Fig. 5,

Fig. 7 eine Ansicht der in die Möbelstruktur eingesetzten Seitenwand mit Befestigungselement und schematisch eingezeichnetem Tablar,

Fig. 8 eine Draufsicht auf die Seitenwand gemäss Fig. 7,

Fig. 9 eine Ansicht einer anderen Ausführungsform einer Seitenwand mit Befestigungselement und schematisch dargestelltem eingesetztem Tablar,

Fig. 10 eine Draufsicht auf die Seitenwand gemäss Fig. 9,

Fig. 11 einen Teil des ersten Ausführungsbeispieles einer Seitenand im Schnitt, das Befestigungselement sowie den Befestigungswinkel und die zugehörige Befestigungsschraube.

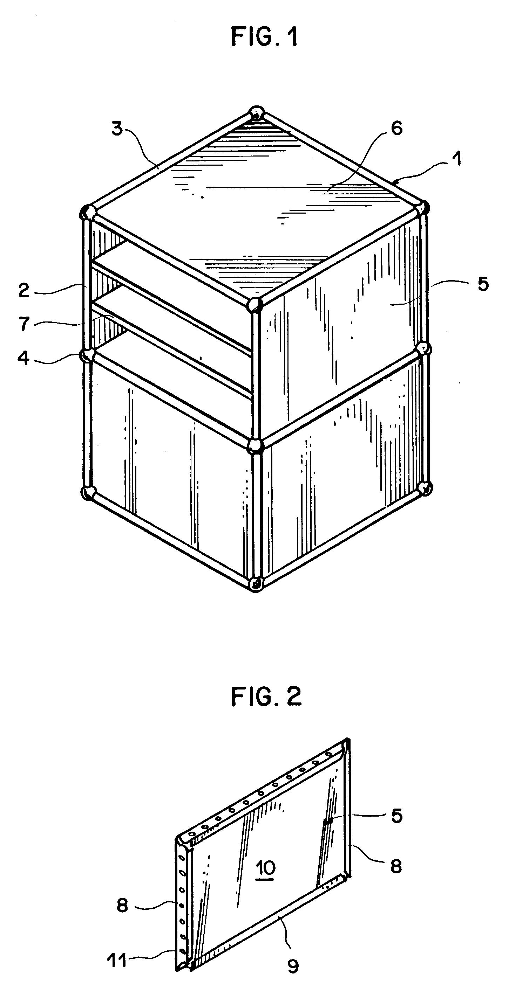

In Fig. 1 ist eine Möbelstruktur 1 mit Längs- und Querträgern 2, 3, Eckverbindungen 4, Seitenwänden 5 und Deckplatte 6 sowie zwischen Seitenwänden 5 eingesetzten Tablaren 7 dargestellt.

Fig. 2 zeigt eine Seitenwand 5 in perspektivischer Darstellung. Die Seitenwand weist zwei schmale Seitenränder 8 sowie zwei Längsseitenränder 9 auf. In den Seitenrändern 8 und 9 sind je auf einer zur Grundplatte 10 der Seitenwand parallelen Geraden in regelmässigen Abständen Löcher 11 angeordnet.

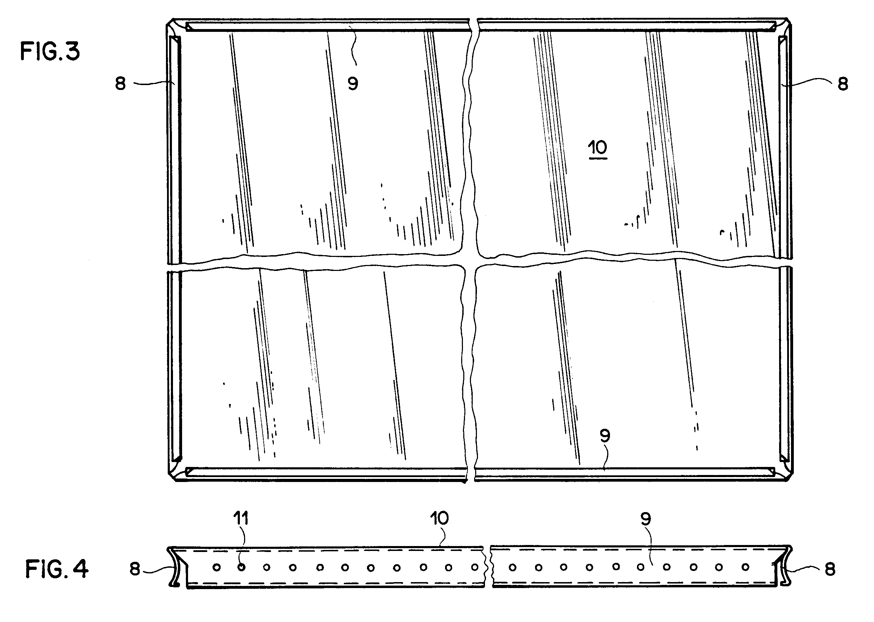

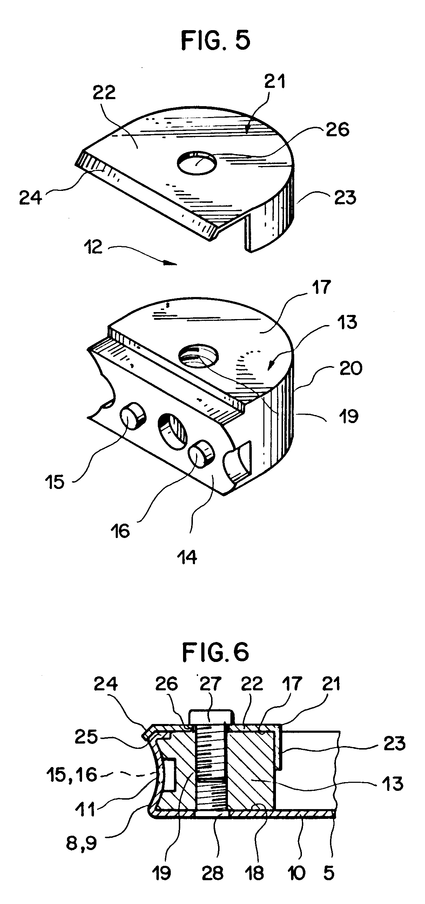

In Fig. 3 ist die Seitenwand 5 in Draufsicht und in Fig. 4 in Seitenansicht dargestellt. Die Seitenränder 8 der Schmalseiten und die Seitenränder 9 der Längsseiten der Grundplatte 10 sind zylindermantelförmig gekrümmt ausgebildet. Der Krümmungsradius entspricht dem Radius der vertikalen und horizontalen Träger 2, 3 gemäss Fig. 1.

In Fig. 5 ist das an den Seitenrändern der Seitenwand oder an der Grundplatte anschraubbare Befestigungselement 12 dargestellt. Es umfasst einen massiven Grundkörper 13 in Form etwa eines halben Zylinders. Eine Stirnfläche 14 des Grundkörpers 13 weist denselben Krümmungsradius auf wie die Seitenränder 8, 9 der Seitenwand 5. Auf einer Mittellinie dieser Stirnfläche 14 sind zwei Befestigungsstifte 15 und 16 angebracht, die zum Eingriff in die Löcher 11 der Seitenränder 8, 9 der Seitenwand 5 bestimmt sind. Senkrecht zu den oberen und unteren Begrenzungsflächen 17 und 18 des Grundkörpers 13 ist eine Bohrung 19 vorgesehen. Die Bohrung 19 verläuft parallel zur zylindermantelförmigen Aussenfläche 20. Zur Montage des Befestigungselementes an einem der Seitenränder 8 oder 9 der Seitenwand 5 ist eine Arretierkappe 21 vorgesehen. Diese Kappe 21 weist einen zur Deckplatte 22 senkrecht angeordneten halbzylindermantelförmigen Rand 23 auf. Dieser Rand 23 übergreift bei der Montage die halbzylindermantelförmige Fläche 20 des Grundkörpers 13. Im weiteren ist die Deckplatte 22 an ihrer geraden Begrenzung 24 schräg abgebogen zum Uebergreifen des oberen Endes 25 der Seitenränder 8, 9 der Seitenwand 5. In der Arretierkappe 21 ist eine Bohrung 26 derart angeordnet, dass, wenn die Kappe 21 auf den Grundkörper 13 gesetzt ist, die Bohrungen 26 und 19 übereinanderliegen.

In Fig. 6 ist ein Schnitt durch einen am Seitenrand 8 oder 9 der Seitenwand 5 angeschraubtes Befestigungselement 12 dargestellt. Die Stifte 15 und 16 greifen in die Löcher 11 des Seitenrandes 8 oder 9 ein. Die auf den Grundkörper 13 gestülpte Arretierkappe 21 arretiert mit dem abgebogenen Rand 24 den Grundkörper 13 am Seitenrand 8 oder 9. Mit einer Schraube 27 wird die Arretierkappe 21 auf den Grundkörper 13 fixiert. Es besteht die Möglichkeit, den Grundkörper 13 ohne Arretierkappe am Seitenrand 8 oder 9 zu befestigen. Zu diesem Zweck wird die Schraube 27 durch die Bohrung 28 in der Grundplatte 10 der Seitenwand in die Bohrung 19 im Grundkörper eingeschraubt.

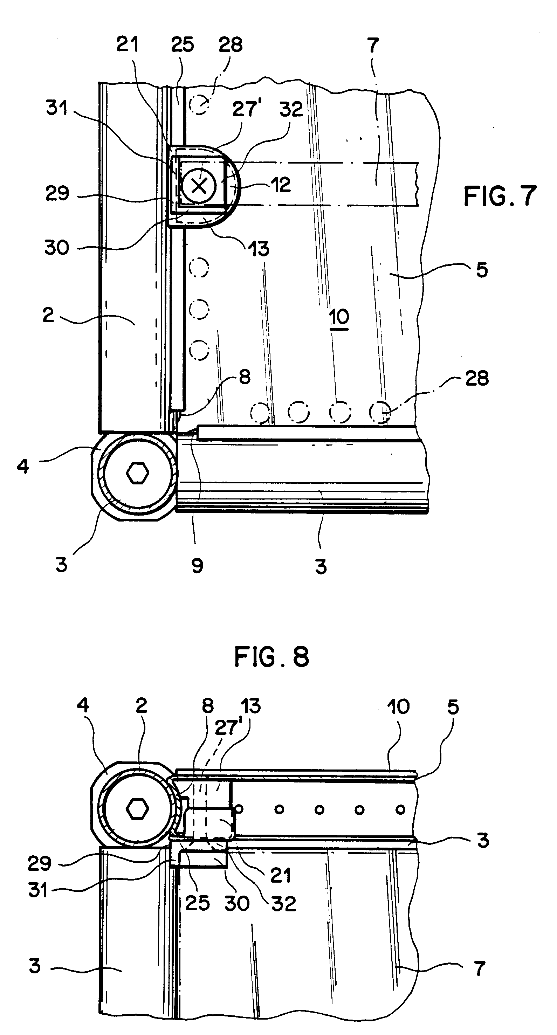

In Fig. 7 ist in Ansicht eine in die Möbelstruktur 1 eingesetzte Seitenwand 5 ersichtlich, wobei das Befestigungselement 12 zur Halterung eines strichpunktiert eingezeichneten Tablars 7 dient. Die Seitenwand 5 liegt mit ihren Seitenrändern 8 und 9 an den vertikalen und horizontalen Trägern 2 und 3 an. Auf das Befestigungselement ist ein Winkelstück 29 mit der Schraube 27', die ebenfalls die Arretierkappe 21 am Grundkörper 13 arretiert, aufgeschraubt. Das Winkelstück 29 umfasst drei Seitenteile 30, 31 und 32. Auf dem Winkelstück 29 liegt eine der vier unteren Ecken des Tablares 7 auf. Zur Befestigung des Tablars 7 in der Möbelstruktur 1 sind an je zwei Seitenrändern 8 zweier Seitenwände 5 Winkelstücke 29 mit Befestigungselementen 12 befestigt.

In Fig. 8 ist eine Draufsicht, teilweise geschnitten, auf ein an Seitenrändern 8 mit Winkelstücken 29 befestigtes Tablar 7 dargestellt.

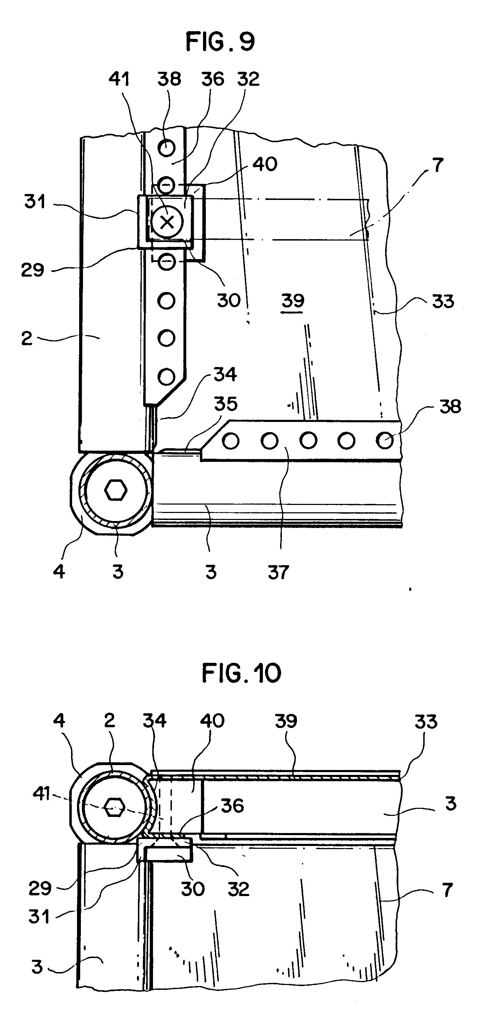

In Fig. 9 ist in Seitenansicht ein weiteres Ausführungsbeispiel einer Seitenwand 33 dargestellt. Die Seitenwand 33 weist ebenfalls Seitenränder 34 und 35 auf, die in ihrem oberen Bereich 36, 37 um 90° abgewinkelt sind. Die abgewinkelten Bereiche 36 und 37 sind mit Löchern 38 zur Montage beispielsweise eines Befestigungswinkels 29 zur Halterung eines Tablars 7 versehen. Zwischen dem abgewinkelten Bereich 36 des Seitenrandes 34 und der Grundplatte 39 der Seitenwand ist ein Grundkörper 40 mit einer Längsbohrung vorgesehen. Das Winkelstück 29 wird mit einer Schraube 41, welche durch ein Loch 38 geführt wird, auf den Grundkörper 40 montiert.

In Fig. 10 ist eine Draufsicht, teilweise im Schnitt, auf das mittels des Befestigungswinkels und des Grundkörpers 40 am zweiten Ausführungsbeispiel der Seitenwand 33 befestigte Tablar dargestellt. Die Seitenwand 33 weist gegenüber dem ersten Ausführungsbeispiel den Vorteil auf, dass sie infolge des stärker umgebogenen oberen Bereiches massiver ausgebildet ist. Vom ästhetischen Standpunkt aus gesehen, ist jedoch das erste Ausführungsbeispiel vorteilhafter.

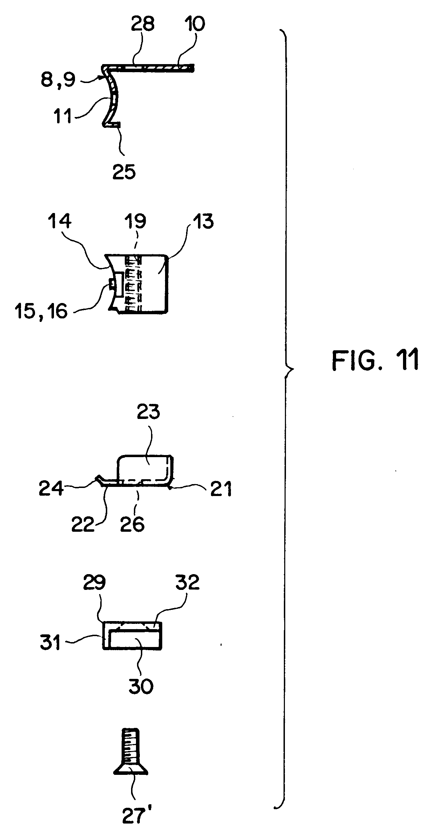

In Fig. 11 sind die wesentlichen Teile der Erfindung, nämlich der Seitenbereich einer Seitenwand gemäss dem ersten Ausführungsbeispiel, ein Grundkörper 13, eine Arretierkappe 21 sowie ein Winkelstück 29 dargestellt.

Im Grundkörper 13 ist zwischen den Stiften 15 und 16 vorzugsweise noch ein Sackloch vorgesehen zur Aufnahme eines eventuell an der Seitenwand befindlichen Schraubenkopfes.

**Patentansprüche**

1.  Befestigungselement zur Befestigung von Einsätzen an einer Seitenwand für eine Möbelstruktur mit einem Grundkörper (13) mit einer Stirnfläche (14), wobei in der Stirnfläche (14) mindestens ein Befestigungsorgan (15, 16) angebracht ist und mindestens eine im Grundkörper (13) vorgesehene Bohrung (19), dadurch gekennzeichnet, dass das Befestigungsorgan zum Eingriff in die Löcher der Seitenränder der Seitenwand bestimmt ist und der Grundkörper (13) zwei plane, parallele Begrenzungsflächen (17, 18), zwischen denen die Stirnfläche liegt, umfasst und die Bohrung (19) senkrecht zu den Begrenzungsflächen (17, 18) verläuft.

2.  Befestigungselement nach Patentanspruch 1, gekennzeichnet durch eine mit dem Grundkörper (13) lösbar verbindbare Arretierkappe (21).

**3.** Befestigungselement nach Patentanspruch 1 oder 2, dadurch gekennzeichnet, dass die Stirnfläche (14) teilzylindermantelförmig ausgebildet ist.

**4.** Befestigungselement nach einem der Patentansprüche 1 bis 3, dadurch gekennzeichnet, dass der Grundkörper (12) senkrecht zu den zwei planen Begrenzungsflächen (17, 18) eine halbzylindermantelförmige Aussenfläche (20) umfasst.

**5.** Befestigungselement nach einem der Patentansprüche 1 bis 4, dadurch gekennzeichnet, dass die Befestigungsorgane als Stifte (15, 16) ausgebildet sind und in einer zu den planen Begrenzungsflächen (17, 18) parallelen Ebene liegen.

**6.** Seitenwand für eine Möbelstruktur mit einer Grundplatte (10) und vier Seitenrändern (8, 9), wobei in den Seitenrändern (8, 9) Durchgangslöcher (11) zur Befestigung eines Befestigungselementes nach einem der Patentansprüche 1 bis 5 angeordnet sind.

**7.** Seitenwand nach Patentanspruch 6, dadurch gekennzeichnet, dass die Seitenränder teilzylindermantelförmig gekrümmt sind.

**8.** Seitenwand nach Patentanspruch 6 oder 7, dadurch gekennzeichnet, dass die Seitenränder oben (25) etwa rechtwinklig abgebogen sind.

**9.** Seitenwand nach einem der Patentansprüche 6 bis 8, dadurch gekennzeichnet, dass die Durchgangslöcher (11) auf der Mittellinie der Seitenränder (8, 9) angeordnet sind.

**10.** Seitenwand nach einem der Patentansprüche 6 bis 8, dadurch gekennzeichnet, dass die Durchgangslöcher (11) im abgebogenen Teil der Seitenränder angeordnet sind.

**Claims**

**1.** A fastening element for attaching inserts to a sidewall for a furniture structure with a body (13) with an end face (14), at least one fastening component (15, 16) being lodged in the end face (14) and there being at least one bore (19) in the body (13), characterized in that the fastening component is intended to engage in the bores in the side edges of the sidewall, and in that the body (13) comprises two plane, parallel limiting surfaces (17, 18) between which the end face lies, and in that the bore (19) runs perpendicular to the limiting surfaces (17, 18).

**2.** A fastening element according to claim 1, characterized by a locking cap (21) detachably connectible with the body (13).

**3.** A fastening element according to claim 1 or 2, characterized in that the end face (14) is concave.

**4.** A fastening element according to one of claims 1 to 3, characterized in that the body (12) comprises an arcuate outer surface (20) perpendicular to the two plane limiting surfaces (17, 18).

**5.** A fastening element according to one of claims 1 to 4, characterized in that the fastening components are pins (15, 16) and lie in a plane parallel to the plane limiting surfaces (17, 18).

**6.** A sidewall for a furniture structure with a base plate (10) and four side edges (8, 9), passage holes (11) being disposed in the side edges (8, 9) for attaching a fastening element according to one of claims 1 to 5.

**7.** A sidewall according to claim 6, characterized in that the side edges are concave.

**8.** A sidewall according to claim 6 or 7, characterized in that the side edges are bent substantially at right angles at the top (25).

**9.** A sidewall according to one of claims 6 to 8, characterized in that the passage holes (11) are disposed on the centre line of the side edges (8, 9).

**10.** The sidewall according to one of claims 6 to 8, characterized in that the passage holes (11) are disposed in the bent portion of the side edges.

**Revendications**

**1.** Elément de fixation pour la fixation d'accessoires sur une paroi latérale d'une structure de meuble, comprenant un corps de base (13) avec une surface frontale (14), au-moins un organe de fixation (15,16) étant disposé sur la surface frontale (14), au-moins un alésage (19) étant aménagé dans le corps de base (13), caractérisé en ce que l'organe de fixation est destiné à s'engager dans les trous des bordures latérales de la paroi latérale, et en ce que le corps de base (13) comprend deux surfaces de limitation (17,18) planes et parallèles, entre lesquelles est disposée la surface frontale, et en ce que l'alésage (19) est perpendiculaire aux surfaces de limitation (17,18).

2. Elément de fixation selon la revendication 1, caractérisé par un capuchon d'arrêt (21) détachable et connectable avec le corps de base (13).

3. Elément de fixation selon l'une des revendications 1 ou 2, caractérisé en ce que la surface frontale (14) a la forme d'une portion d'enveloppe cylindrique.

4. Elément de fixation selon l'une des revendications 1 à 3, caractérisé en ce que le corps de base (13) comprend une surface externe (20) ayant la forme d'une enveloppe d'un demi-cylindre, perpendiculaire aux deux surfaces de limitation (17,18) planes.

5. Elément de fixation selon l'une des revendications 1 à 4, caractérisé en ce que les organes de fixation ont la forme de chevilles et sont disposés dans un plan parallèle aux surfaces de limitation (17,18) planes.

6. Paroi latérale pour une structure de meuble comprenant une plaque de base (10) et quatre bordures latérales (8,9), des trous de passage (11) étant disposés dans les bordures latérales (8,9) pour fixer un des éléments de fixation selon l'une des revendications 1 à 5.

7. Paroi latérale selon la revendication 6, caractérisée en ce que les bordures latérales sont pliées en forme de portion d'enveloppe cylindrique.

8. Paroi latérale selon l'une des revendications 6 ou 7, caractérisée en ce que les parties supérieure des bordures latérales sont repliées environ perpendiculairement.

9. Paroi latérale selon l'une des revendications 6 à 8, caractérisée en ce que les trous de passage (11) sont disposés sur la ligne médiane des bordures latérales (8,9).

10. Paroi latérale selon l'une des revendications 6 à 8, caractérisée en ce que les trous de passage (11) sont disposés sur la partie repliée des bordures latérales.

# FIG. 1

# FIG. 2

FIG.3

FIG.4

## FIG. 5

## FIG. 6

FIG. 7

FIG. 8

## FIG. 9

## FIG. 10

FIG. 11